# EUROPEAN PATENT SPECIFICATION

(11) **EP 1 749 448 B1**
(45) Date of publication and mention of the grant of the patent: **28.10.2009**
(21) Application number: 05743929.1
(22) Date of filing: 27.04.2005
(51) Int. Cl.: A23C 11/10, A23L 1/212

(54) **PRODUCT WHICH IS FERMENTED WITHOUT LACTOSE FROM A SHAKE COMPRISING NON-VEGETABLE DRIED FRUITS AND/OR ORGEAT**
LAKTOSEFREIES FERMENTATIONSPRODUKT VON EINEM MIXGETRÄNK MIT NICHTPFLANZLICHEN GETROCKNETEN FRÜCHTEN UND/ODER ERDMANDELGETRÄNK
PRODUIT FERMENTE SANS LACTOSE A PARTIR DE MILK-SHAKE COMPRENANT DES FRUITS SECS, PAS DE LEGUMES, ET/OU DE L'ORGEAT

(30) Priority: 30.04.2004 ES 200401043
(43) Date of publication of application: 07.02.2007
(73) Proprietor: Consejo Superior de Investigaciones Cientificas, 28006 Madrid (ES)
(72) Inventor: PEREZ MARTÍNEZ, Gaspar, E-46100 Burjassot (ES); MIRALLES ARACIL, Mª Carmen, E-46100 Burjassot (ES); MARTÍ VIDAGANY, Adolfo, E-46100 Burjassot (ES); MARTÍNEZ ORTIZ, Isabel, E-46100 Burjassot (ES)
(74) Representative: Ungria Lopez, Javier
(86) International application number: PCT/ES2005/070053
(87) International publication number: WO 2005/104862

(56) References cited:
- WO-A1-02/37984
- WO-A1-91/17672
- WO-A1-99/27795
- CA-A1- 2 383 021
- CN-A- 1 385 082
- DE-A1- 19 913 399
- JP-A- 2 072 848

## Description

### SECTOR OF THE ART

Dairy industry, processing of tree nuts, production of chufa orgeat, production of almond milk, milk desserts.

### STATE OF THE ART

In regions with a dry temperate climate, there exist few dairy farms, as a result of which, evidently, milk for being drunk fresh does not form part of their cultural heritage. Nevertheless, numerous drinks have traditionally been prepared on the basis of vegetable products of great nutritional value and notable organoleptic qualities, standing out among which are almond milk and chufa orgeat.

The consumption of almonds and derivative products have been tied to the culture of these Mediterranean climate regions since pre-Roman times, constituting a food of high nutritional and energy value. Its biochemical composition varies little among the numerous known varieties: the lipid fraction is rich in polyunsaturated fatty acids, and it therefore possesses anticholesterolaemic properties, its proteins are highly digestible and the main carbohydrate it contains is saccharose (Caracteristicas fisico-quimicae y tecno16gicas de la almendra de la Comunidad Valencia (1999), Monografías. Vols I, II and III.- AINIA, Valencia). Its sensorial qualities are excellent since it has a unique and characteristic flavour.

On account of its nutritional properties "almond milk" has been known and used since ancient times in substitution baby food, as a dietary complement for women during lactation and for the elderly, and also for its cosmetic properties. Bearing in mind the average percentage composition of the tree nut (Table 1), almond milk (or shake) with a content in dry matter of 10-15 % can in nutritional terms come close to cow milk, with a slight excess of fat and deficiency in sugars. Nevertheless, the mineral content of cow milk is still very much greater (Table 2).

**Table 1. Comparison of the average content in nutrients of the main varieties of almond with cow milk.**

| COMPOSITION | ALMOND (DRY WEIGHT) (a) | COW MILK (b) |
|---|---|---|
| FAT g / 100 g | 53 - 55 (60 - 74 % oleic, 20 - 32 % linoleic) | 4 (30 - 40 % oleic, 25 - 30 % linoleic) |
| PROTEIN g / 100 g | 19 - 21 | 3.4 |
| SUC-ARS g / 100 g | 3.5 - 4.2 | 4.5 - 5 |
| | Vit E (tocopherol) 250 - 400 | Vit A 0.02 - 0.2 |
| MOST ABUNDANT VITAMINS mg/kg | Vit B1 (thiamine) | Vit D 0.0002 |
| | 2.1 | Vit C 0-5 - 20.8 |
| | Vit B2 (riboflavin) | |
| | 7.5 | Vit B2 0.2 |
| | Vit B3 (niacin) | Vit B6 0.015 |
| | 31.0 | |
| | Vit B5 (pantothenate) | |
| | 4.4 | |
| | Vit B6 | |
| | 1.5 | |
| ENERGY | 2431 kJ / 581 kCal (per 100 g) | 2900 kJ / 690 kCal (per litre) |

| | | |
|---|---|---|
| SOURCES: (a) Características fisico-quimicas y tecnológicas de la almendra de la Comunidad Valencia (1999), Monografías. Vols I, II and III.- AINIA, Valencia); USDA National Nutrient Database for Standard Reference, Release 16 (July 2003). (b) Milk and Dairy product technology (1998) (ed. E: Spreer) Marcel Deckker, Inc, New York, USA. | | |

**Table 2. Comparison of the average mineral content of the main varieties of almond with cow milk (mg / 100 g).**

| Composition | Almonds ^{(a)} (dry weight) | Cow milk ^{(b)} |
|---|---|---|
| Potassium | 763.3 | 145 |
| Calcium | 270.5 | 125 |
| Phosphorus | 574.8 | 75 |
| Magnesium | 291.3 | 13 |
| Sodium | 10.2 | 50 |
| Manganese | 1.8 | - |
| Iron | 4.8 | 310 |
| Cobalt | 1.5 | - |
| Zinc | 4.4 | - |

| | | |
|---|---|---|
| SOURCES: (a) Características fisico-quimicas y tecnológicas de la almendra de la Comunidad Valencia (1999), Monografías. Vols I, II and III AINIA, Valencia); USDA National Nutrient Database for Standard Reference, Release 16 (July 2003). (b) Milk and Dairy product technology (1998) (cd. E: Spreer) Marcel Decker, Inc, New York, USA. | | |

Today, there exist numerous companies which distribute liquid products manufactured exclusively on the basis of almonds, hazelnuts or other tree nuts, which legally cannot be called milk and so the terms shake, milk-like, etc. are used. The oldest commercial product in this range could be almond cream or concentrate, which is a paste of finely ground almonds ready for being dissolved in water by the consumer and which keeps well thanks to its high concentration of added sugar (40 %). Nevertheless, there is no record that any publications or registered commercial product prepared by fermenting this substrate exist.

In the Mediterranean Basin and North Africa the tubers of *Cyperus sculentus* are cultivated and consumed as a tree nut. In Spain they are known as "chufa" and in English also "earth almond" or "tigernut" as well as "chufa", and it is used to prepare orgeat, which in olden times used to be known as chufa milk. This chufa extract possesses a high content of starches and sugars (Table 3), as well as a high proportion of polyinsaturated fatty acids (mainly oleic acid).

**Table 3. Nutritional value of orgeat from chufa (tigernut, Cyperus sculentus)**

| **COMPOSITION OF ORGEAT** | | |
|---|---|---|
| | **AVERAGE EXPERIMENTAL VALUES (a)** | **LEGAL LIMITS (b)** |
| STARCH | 2.42 % | > 1.9 % |
| CHUFA SUGARS | 2 - 2.5 % | |
| ADDED SUGARS | 10 - 15 % | |
| TOTAL CARBOHYDRATES | | > 10 % |
| FAT | 2.62 % | > 2 % (vegetable) |
| Fatty acids: | | |
| Palmitic | 12.4 % | |
| (C16) | 2.44 % | |
| Stearic | 74.67 % | |
| (C18) | 9.45 % | |
| Oleic | | |
| (C18:1) | 0.35 % | |
| Linoleic (C18:2) | | |
| Linolenic (C18:3) | | |
| PHOSPHOLIPIDS | 5.44 % | |
| | | |
| PROTEINS | 0.55 % | 0.35 % |
| ASH | 0.22 | 0.10 % |
| FIBRE | | 0.38 % |
| ENERGY VALUE (litre) | | 760 cal |
| TOTAL SOLIDS | 22.82 % | |
| SOLUBLE SOLIDS | 8 % | 12 % |
| Mg (ppm) | 154 | |
| K (ppm) | 554 | |
| P (ppm) | 280 | |
| pH | | > 6.3 |

| | | |
|---|---|---|
| SOURCES: (a) La horchata de chufas: higienización, estabilización y tipificación (1985) Editors: B. Lafuente, F. Gasque, F. Piñaga, R. Vila. Instituto de Agroquímica y Tecnología de Alimentos (CSIC) ISBN: 84-00-06072-5. (b) Royal Decree 1338/1998, of 28 October 1988, approving the technical-health regulations for the preparation and sale of orgeat of chufa. | | |

The traditional preparation of orgeat from chufa starts with the washing and germicidal treatment of the chufa. Once rinsed, they are then put in soak for a period of time, rinsed again and then crushed in a mill. During crushing, approximately 3 litres of water are added per kilo of chufa, and it is then passed through a press to obtain the first extract and sieved. The residue from the sieve and the press are mixed together, with around two litres of water being added per kg of chufa, and it is passed through a press and sieved in order to form a second extract which is added to the first, with which the final extract is obtained. Finally, the preparation process for the orgeat is completed by dissolving the desired proportion of cane sugar (saccharose), generally between 100 and 150 grams per litre of extract, and it is sieved again (summary procedure, according to the Regulating Council for Orgeat of Chufa of Valencia, www.chufadevalencia.org/ESP/HORCHATA). It is traditionally drunk on a seasonal basis and fresh, though there are numerous commercial firms which distribute this product throughout the year, pasteurised, sterilised or frozen. It possesses very characteristic organoleptic properties, nevertheless, its high content in insoluble starches and the lack of natural emulsifiers in this product to a large degree make it difficult to conserve cold and retain its stability following heat treatment. No register of fermented products obtained starting from chufa orgeat exists.

Owing to problems of lactose intolerance and allergies to milk proteins, and to a considerable saturation of the market, an increase can be seen in researches and publications in which the use is described of fermentation substrates having a vegetable origin. Nevertheless, in none of them is almond milk, or milk of tree nuts or chufa orgeat used as the raw material [Martensen, O., Öste, R. and Obst, H. (2002) Texture promoting capacity and EPS formation by lactic acid bacteria in three different oat-based non-dairy media. Eur Food Res Technol 214: 232-236; Kovalenko, IV: Briggs, JL (2002) Textural characterization of soy-based yogurt by the vane method. Journal of Texture Studies 33 (2) 105-118; Ashay, OA; Taiwo, LB; Fasoyiro, SB; Akinnagbe, CA (2001) Compositional and shelf-life properties of soy-yogurt using two starter cultures. Nutrition and Food Science; 31 (5) 247-250; Yazici, F; Alvarez, VB; Hansen, PMT (1997) Fermentation and properties of calcium-fortified soy milk yogurt. Journal of Food Science; 62 (3) 457-461; Heenan, CN; Adams, MC; Hosken, RW; Fleet, GH (2002) Growth medium for culturing probiotic bacteria for applications in vegetarian food products. Lebensmittel Wissenschaft und Technologie; 35 (2) 171-176].
A series of dairy substitutes and fermented products of vegetable, legume origin, primarily soy, have also burst into the market (especially in natural, organic and vegetarian food stores), in spite of their organoleptic shortcomings and certain problems of allergies deriving from their protein.

There exist patents that registered the use of vegetable proteins as the basis for a dairy fermentation.

For example, application US2003031756: Method for preparing food products by fermenting soy milk with *Streptococcus thermophilus*. Boufassa Corinne; Tourancheau Myriam, 2003-02-13, GERVAIS DANONE SA (US), contains a method for obtaining a new type of product with reduced post-acidification, by fermentation with *Streptococcus thermophilus* or other lactic bacteria, starting from soy milk as base (50 %), to which other components are added, such as grain flours or almond milk. Its different composition will grant it intrinsically different properties from the product described in this invention.

For example, patent CN1385082 Lactic acid drink having almond protein and preparation process thereof. Ma Jing. 2002-12-18, presents an acid drink obtained starting from milk and almond milk as raw material, which is subjected to lactic fermentation. This drink is described with beneficial properties for health and an agreeable flavour. Nevertheless, it possesses milk, something which is sought to be avoided in vegetarian diets, or if a person has allergies or intolerance to the components of milk.

For example, the application CN1270217: Green-series functional beverages An Guoqing, 2000-10-18, also describes the use of fermented milk as a starting product to which are added shakes or extracts of walnut, peanut, black sesame, almond, chrysanthemum flower, etc., with the aim of improving its content in nutrients or promoting its absorption, preventing or curing illnesses. As has been mentioned, in the invention that is described further below, the aim has been to avoid the use of milk.

Moreover, a considerable boom in what are known as "Functional Foods" exists, some of which are so-called because they contain microorganisms classified as probiotic. These are microorganisms which, beyond their mere nutritional input, exert beneficial effects on one or more organs, improving the general state of health, or reducing the risk of contracting illnesses [American Journal of Clinical Nutrition (2001) Special issue on Prebiotics and Probiotics, Feb; Vol 73 (2 Suppl)]. More specifically, the following effects of "functional" bacteria (probiotics) have been demonstrated: they reduce the lactose content of dairy products, they promote degradation of cholesterol and bile salts, they improve both local and the systemic immunological response, they inhibit proliferation of pathogens, they produce numerous beneficial metabolites and vitamins, and they help to eliminate carcinogenic compounds . Although foods containing them are classified as Functional Foods, in many countries they cannot be called yoghurts since, for example, and according to the Spanish Food CODEX, "yoghurt is a fermented product made with milk (of cow or other animal) which contains a minimum of 10⁷ ufc/ml of *Streptococcus salivarius subsp thermophilus* and *Lactobacillus delbruekii* subsp *bulgaricus*."
WO 02 37984 discloses a fermented non-dairy product. It is an oat-based milk which is fermented with acid bacteria. There is no hint suggesting the possibility of using tree nuts and/or chufa for the same purpose.
WO 99 27795 D4 describes a fermented product starting from vegetable raw material, being soy always an essential component in the product disclosed therein.
JP 2072848 discloses a fermented product starting from nuts and that is converted into a paste using lactic bacteria. According to the present invention, there is no enzymatic degradation previous to the fermentation. Moreover, according to JP 2072848 the product from tree nuts that is fermented is not a milky solution, but a paste.
DE 199 13 399 discloses a fermented milk product containing between 0.1 and 30% chufa per liter of milk and with the characteristics of a milk product
CN 1385 082 discloses a drink comprising milk and almond milk as raw material. The product disclosed by D7 is a lactic acid based drink containing almond protein. There is also no hint in CN 1385 082 disclosing or suggesting a reason for the suppression of milk.

### DESCRIPTION OF THE INVENTION

### Brief description of the invention

This invention describes how to exploit the nutritional richness and sensorial qualities of almond, tree nuts and chufa orgeat, in order to prepare products fermented with lactic bacteria and probiotics. Products have been obtained that are above all tasty, with multiple beneficial effects on health: those derived from almond and tree nuts (polyunsaturated fatty acids, proteins with easy digestibility, low sugar content) and the probiotic properties of the bacteria that are used. These exclude the presence of milk proteins, lactose and soy proteins, avoiding problems of intolerance and allergies, as well as their taste of bean (soy). Also, these products can be sweetened or enriched with certain minerals (Fe, Ca), vitamins, fibre or oligosaccharides with bifidogenic effect., etc. Due also to their high content in potassium and magnesium, these products constitute an excellent nutritional complement for specific population sectors, such as children, adolescents, athletes or the elderly.

### Detailed description of the invention

This invention consists of a range of products obtained by lactic fermentation of drinks, of vegetable origin, traditional in Mediterranean Europe and North Africa, as might be milk (or shake) of almonds and chufa orgeat, as well as other new products of a similar nature obtained from other tree nuts. Both almond milk and chufa orgeat are products very rich in nutrients, though with a different composition. The deliberate absence of milk, soy and derivatives of both in these new products will avoid problems of intolerance and allergies to them. Moreover, these new products offer different basic flavours which exclude the dairy flavour as well as the pronounced bean flavour of soy bean and its derivatives. In the product obtained, the coliform counts are zero and it possesses low post-acidification, in other words the pH drops by less than 0-1-0.2 pH units in 28 days. To these products substances and additives can be added in order to obtain products possessing very diverse physico-chemical, nutritional and sensorial characteristics. So, all or part of the oil of the almond, which is valuable in itself, can be eliminated in order to obtain low-fat derivatives and to standardise the product.

### Almond, tree nuts milk (or shake) and chufa orgeat

It is very important to obtain a mother liquor containing sugars that can be fermented by the lactic acid bacteria that are going to be used as starters, as well as proteins and additives, in such a way that a good texture and viscosity is obtained in the final fermented product (equivalent to that of traditional yoghurt, drinkable yoghurts or fermented milks). Also, the starting mother liquor has to have a high microbiological quality, at least equivalent to pasteurised cow milk (pathogen and enterobacteria counts = 0;total mesophiles < 10²), since it will normally be subjected to temperatures of 30-37 °C during the fermentation. To achieve this, all processes must be carried out under strict hygienic conditions. The process starts with crushing, which can be done in one or more phases. If it is done in a single phase, the sugars and additives are added beforehand. If a preliminary coarse crushing is done first, the sugars and other additives are added after this first phase, prior to the fine grinding.
For the fine grinding, a stone or colloidal mill is used until a suspension is obtained having the texture that is sought, which can be from smooth to lumpy, with the concentration of dry matter also being adjusted according to taste. After that, extraction (or addition) of fatty acids and oils is then carried out followed by its homogenisation. In the trials conducted, additives are added prior to fine grinding since it suited our conditions better, but they could also be added in other phases of the preparation.

The heat treatment is of fundamental importance for reducing bacterial counts and therefore ensuring hygienic quality, and is carried out following the grinding and homogenisation. The conditions of temperature, time and pressure will depend on the nature of the product (for example, almonds, hazelnuts, chufa, etc.), on the size of particles in suspension, its concentration of solids, viscosity, microbiological load prior to treatment and the stability of the components during heat treatment. This treatment can cause denaturation of the proteins, but it favours gelling of the actual almonds and also of the additives added for stabilising the product, such as xanthan gum, pectin, carob gum, acacia gum or other polymers. The trials with almond milk described in this patent were conducted on raw material pasteurised in our pilot plant, though the fermentation was also tested on a commercial product (almond shake, Diemilk, Nitriops) treated at high temperatures (UHT) with the same results. Also, the trials with hazelnut milk (shake) and chufa orgeat were conducted with products sterilised by the UHT method.
**Fermentation.-** The lactic bacteria and bifidobacteria used ferment lactose (disaccharide sugar from milk) and other sugars producing lactic acid (produces acidification), polysaccharides (give a gelatinous texture) and volatile compounds (contribute aromas). Both tree nuts and chufa possess sufficient mono- and disaccharide sugars (as glucose, fructose and saccharose) for being able to guarantee their fermentation, nevertheless, these can also be added before or after fine grinding in abundant quantity as fermentation substrate and as sweetener. Although lactose could also be added, in the examples that are described its presence is avoided since the product sought to be obtained must not contain lactose and, in spite of the fact that its elimination could be avoided, it was preferred to obviate the negative consequences which it entails for many consumers.

So far, trials have been carried out with highly satisfactory results using various lactic ferments of the species *St. salivarius* subsp *thermophilus* as well as this same bacterium *St. salivarius* subsp *thermophilus* together with *Lactobacillus delbruekii* subsp *bulgaricus, Bifidobacterium lactis, Lactobacillis casei* and *Lactobacillus acidophilus*. Other probiotic species can easily be incorporated to these products, such as *Lactobacillus* rhamnosus, *Lactobacillus johnsonii*, *Lactobacillus fermentum or Lactobacillus reuteri*. Likewise, almond milk can also be fermented with kefir inoculum, obtaining for example almond kefir or orgeat kefir. Kefir inoculum is not a single bacterium/yeast but instead a mixed culture and is also very variable in its composition of strains.

As is described in the examples, in order to obtain the necessary acidity (pH < 4.6), the recommendable initial inoculum of *St*. *salivarius* subsp *thermophilus* is at around 10⁶ - 10⁷ cfu/ml and that of the probiotics (other species) is adjusted according to their fermenting potential and other factors related to their metabolic effects. Equally, the optimum temperature for incubation is 42 °C for *St. salivarius* subsp *thermophilus* but this can vary depending on the other species inoculated and the characteristics of the product.
**The final product.-** The safety of these products is guaranteed by the simple fact that all the components used for their preparation are habitually consumed and are authorised. So, as raw materials we will use traditionally consumed pasteurised or sterilised products (ground tree nuts or chufa orgeat, water and authorised food additives), to which are added starter cultures of dairy products and probiotics obtained from specialist companies, with the corresponding guarantees.

The products obtained possess a consistency similar to that of traditional yoghurt, drinkable yoghurts or fermented milks, in other words with viscosity values of between approximately 60 and 250 mPas/sec. depending on the starter culture and additives used. In this regard, according to the measurements made in our laboratory, one can differentiate between the milk fermented drinks with a lower degree of viscosity of from 37 to 155-160 mPas/sec (respectively from Natural Fermented Milk [Central Lechera Asturiana] and Dan'up [Danone]) and fermented yoghurts and milks for eating "with spoon", which possess average values of 210 to 250 mPas/sec (Natural Yoghurt and Bio [Danone], La Lechera [Nestlé], etc.). However, this property can be adjusted to other values by means of the appropriate additives. They are above all tasty, with variable acidity according to the starter inoculi or probiotics used (caused by the formation of lactic acid) and a mild aroma and flavour of fermented dairy product (possibly due to the formation of diacetyl and acetaldehyde). This makes them suitable for being mixed with different products such as a variety of fruits, chocolate, honey, cereals, various kinds of essences and flavours which will be able to enormously expand the range of products derived from them, or which can be obtained by later mixtures.

The inclusion of probiotic bacterial species has the consequence that the product will possess multiple beneficial effects on health: those deriving from almond and tree nuts (polyunsaturated fatty acids, proteins with easy digestibility, high K' content, low sugar content, etc.) or of chufa orgeat, and the probiotic properties of the bacteria that are used.

Given that microbial fermentation consumes a defined quantity of the dissolved sugar, products can be designed with different sugars and different quantities of them, in order to obtain products with different properties, such as their sweet taste or astringent capacity. Artificial sweeteners and non-metabolisable sugars (fructose, sorbitol, etc.) can also be used in the preparation of low calorie products or products for diabetics.

Also, these products can be enriched with certain minerals (Fe, Ca), vitamins, fibre or oligosaccharides with bifidogenic effect, etc., so that these products can meet the needs of specific population sectors, such as children, adolescents, athletes or the elderly.

A particular embodiment of this invention which would have a fair degree of importance would give rise to FERMENTED PASTEURISED PRODUCTS WITH "BIFIDUS" EFFECT but WHICH WILL NOT REQUIRE COLD CHAIN. This will be achieved by adding, among other additives, oligofructosaccharides or different starches to the almond milk mother liquor. Adjusting its concentration, and also that of other gelling agents (the oligofructosaccharides on their own have thickening properties) in order to obtain the desired viscosity. In this case, the initial fermentation will be carried out at least with one strain of *S*. *salivarius* subsp *thermophilus* and afterwards the product is pasteurised, being left ready for marketing. Although this product will lack lactic ferments and live probiotics, it will contribute major logistic and marketing advantages.

### BRIEF DESCRIPTION OF THE CONTENT OF THE FIGURES

**FIGURE** 1: Evolution of pH during the fermentation of almond milk inoculated with 10⁷ ufc/ml of three strains of *Streptococcus salivarius* subsp *thermophilus*: BS5 (■), BS9 (Δ) and BS12/ (X). The control line represents the evolution of milk pH without inoculation with starters.
**FIGURE 2****:** Evolution of pH during fermentation of almond milk inoculated with 10⁸ ufc/ml of *St. salivarius* subsp *thermophilus*: BS5 (■), *St. salivarius*: BS5 plus *Bifidobacterium lactis* BL230 (Δ) and *St. salivarius* with *L. casei*: BL227 (X). The control line represents the evolution of milk pH without inoculation with starters.
**FIGURE 3****:** Evolution of pH during fermentation of hazelnut milk inoculated with 10⁸ ufc/ml of *St*. *salivarius* subsp *thermophilus*: BS5 and *Lactobacillus acidophilus* BL228 (■). The control line represents the evolution of milk pH without inoculation with starters.
**FIGURE 4**: Evolution of pH during fermentation of orgeat of chufa (*Cyperus sculentus*) inoculated with 10⁸ ufc/ml of three strains of *St*. *salivarius* subsp *thermophilus:* BS5 and *Lactobacillus acidophilus* BL228. The control line represents the evolution of orgeat pH without inoculation with starters.

### EXAMPLE 1

### OBTAINING A PRODUCT FERMENTED WITH St. salivarius subsp thermophilus STARTING FROM ALMOND MILK.

***Materials used.***- The almonds used were from the varieties Marcona and Ferraduel, with similar results being obtained in both cases. Different stabilising agents were tested (gelling agents or thickeners) such as carob gum, xanthan gum, acacia gum, maize starch, carragenate and pectin, in concentrations of 0.5 % and 0.3 %, with xanthane gum, acacia gum and carragenate being finally selected. The gelling agents and stabilisers are of a very varied nature and have a synergic effect. Different sugar concentrations were tested (from 10 to 77 g/l), the sugar at all times being saccharose (cane sugar).
***Pilot plant equipment.-*** Steam drum (Groen), household mincer with glass vessel (Braun), colloidal mill (Fryma), homogeniser (Manton Gauli), tubular exchanger manufactured by Luzzysa, S.A. and automated by SUGEIN S.A. and laminar flow chamber (Telstar S.A.).
***Other* laboratory *equipment.***- viscometer Tester VT5^{R} (Haake).
***Microbiological methods.***- The counts on a petri dish were made in the following culture media: Coliforms, VRBG at 42°C; sulphite-reducing Clostridia, TSC-D-cycloserine at 42°C; total mesophiles TSA at 37°C; aerobic sporulates, LBA at 37°C, after warming for 10 minutes at 60°C, *Streptococcus* STA at 42°C; Lactobacilli and *Bifidobacterium lactis*, MRS at 37°C.
*Monitoring of acidification of the product during fermentation*.- In order to monitor the fermentations, a pH and conductivity metering equipment was used (Consort) with 6 ports and connection to an R2332 port of a tabletop computer.

### 1.- Obtaining a homogenised and pasteurised almond milk (or shake).

First of all, a pasteurised substrate has to be obtained (free of contaminants and possible pathogens) with optimum properties for supporting the growth of lactic bacteria (lactic ferments), in such a way that the physical, nutritional and organoleptic properties of the product obtained following the fermentation are suitable.

Different batches of between 1 and 2 kg of shelled almonds were scalded in a drum of approximately 5 1 capacity. After being peeled by hand with hygienic gloves, they were subjected to a first coarse grinding in a mincer (Braun) after which water was added until a concentration of almonds was reached of 100 g/l, followed by additives in the following proportions: 66 g/l of cane sugar, 3g/l of acacia gum, 3 g/l of xanthane gum and 3 g/l of I-carragenate. The mixture was then subjected to fine mincing in a colloidal mill until the product had a milky appearance, with a fine texture and without any fragments being perceptible to the palate.

It was then homogenised at 300kg/cm² pressure. At this point, a control of the process was conducted with a bacterial count (Table 4, data "Before pasteurising"). It was then pumped into the tubular exchanger for being pasteurised. The heat treatment was conducted at atmospheric pressure for more than 6 minutes at 95°C. At this temperature, more prolonged treatments could cause breakage of the suspension, possibly due to denaturation of proteins. After pasteurisation, the second control was carried out with bacterial counts (Table 4). The data from the microbiological control of the process are shown in Table 4. The main conclusion is that the temperature has to be kept at 95°C for more than 6.30 minutes in order to have total mesophile counts < 10 cfu per millilitre. After that, the inoculi of the cultures are mixed into the product and a bacterial count is performed.

**Table 4 Fine-tuning of parameters for the pasteurisation process: bacterial counts and pH of almond milk**

| | **Initial pH** | **PASTEURISATION CONDITIONS** | | | **Total mesophile counts cfu/ml** | |
|---|---|---|---|---|---|---|
| | | **Residence time (min)** | **Temp (°C)** | **Flow l/h (QL)** | **Before pasteurising** | **After pasteurising** |
| 1^{ST} MANUFACTURE | 6.72 | 6.05 | 95-96 | 143.00 | 5.1 x 10⁶ | 1.2 x 10² |
| 2^{ND} MANUFACTURE | 6.65 | 6.33 | 95-96 | 137.00 | 2.86 x 10⁵ | < 10 |
| 3^{RD} MANUFACTURE | 6.56 | 6.75 | 78-80 | 128.00 | 2.73 x 10⁵ | 1.2 x 10² |
| 4^{TE} MANUFACTURE | 6.65 | 6.70 | 94-95 | 135.00 | 6.63 x 10³ | < 10 |
| 5^{TE} MANUFACTURE | 6.52 | 0.12 | 117 ±2 | 158 | 1.2 x 10⁴ | < 10 |

### 2.- Fermentation trial with St. salivarius subsp thermophilus.

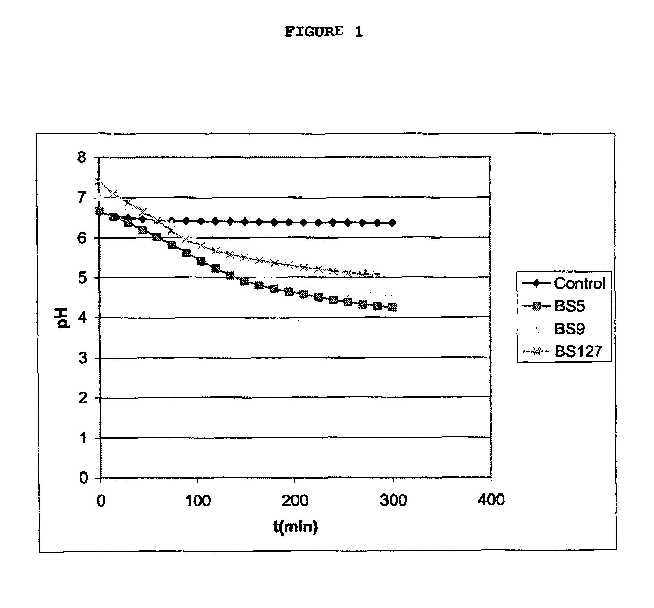

Although almond possesses 3.5 to 4.2 % of simple fermentable sugars (Table 1), we wished to test the addition of other mono- and disaccharides (such as glucose, fructose and saccharose) in abundant quantity as fermentation substrate and sweetener. The efficiency of fermentation of these sugars will depend on the bacterial species and strains used. Prior knowledge of the fermenting capacity of different candidate lactic bacteria and the methods developed in our laboratory have enabled us to make a quick selection of those which produce acidification and formation of polysaccharides suitable for the type of product desired. At this point, the measurement of viscosity, bacterial counts and perishability is carried out. The trials conducted with various strains of the species *St*. *salivarius* subsp *thermophilus* were highly satisfactory (Figure 1). It can be seen that with the three strains used the pH desired in these products can be reached (4.4 - 4.6), though with different fermentation times. As a consequence, the number of coliforms detected in this product was zero at all times.

### Example 2

### OBTAINING A FERMENTED PRODUCT STARTING FROM ALMOND MILK WITH PROBIOTICS.

Once the first fermented product or BASE PRODUCT of the above example had been developed, the addition of probiotic bacteria was tested. Nowadays, the ones most used on a commercial basis are strains of the species: *Bifidobacterium lactis, L. casei, L. rhamnosus*, *L*. *acidophilus, L. delbruekii* subsp *bulgaricus, L. johnsonii, L*. *fermentum* and *L*. *reuteri*, among others. *St. salivarius* subsp. *thermophilus* itself which, along with *Lactobacillus delbruekii* subsp *bulgaricus,* is responsible for the fermentation of yoghurt, is frequently regarded as a probiotic in itself.

Each probiotic strain possesses its own metabolic characteristics. For that reason, certain conditions need to be adjusted, such as incubation temperature and the nature of the sugars that are added (see above), with the aim of obtaining products suitable for consumption and in which the probiotics are present in large numbers, since it is estimated that the minimum intake of a probiotic ought to be higher than 10⁹ bacteria per dose.

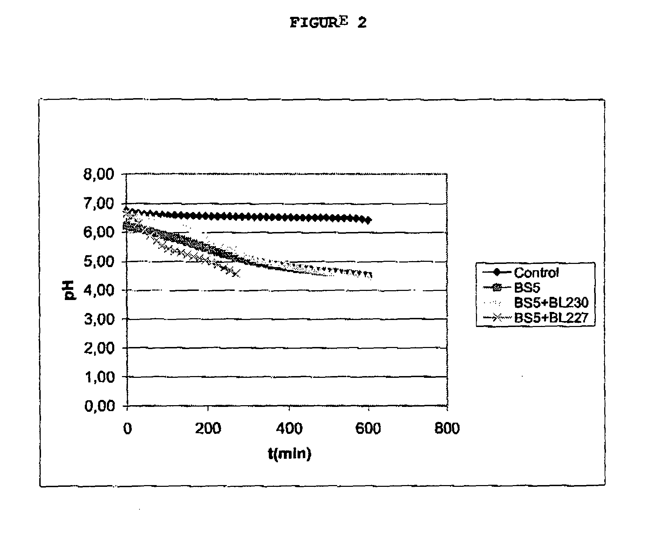

The co-inoculation of almond milk (of identical composition to that described above) with *St. salivarius* subsp *thermophilus* and also with three strains of the species: *Bifidobacterium lactis, L. casei*, and *L. acidophilus* were tested in independent experiments. On incubating at 37°C in order to permit the growth of the probiotic strains, *St. salivarius* subsp *thermophilus* ferments and develops more slowly than at 42°C (see Figure 1). Nevertheless, the results show that addition of a new bacterium accelerates the fermentation process (Figure 2), in all cases obtaining products with very suitable physico-chemical and sensorial characteristics (Table 5). Table 5 also shows the microbiological parameters of the process, demonstrating that there is a proliferation of inoculated bacteria in the almond milk. The properties of the product obtained are usually suitable, apart from inoculation with *L. casei*, in which case the sugar that is added or the inoculum ought to be modified in order to improve its commercial possibilities.

**Table 5. Result of different fermentation tests on almond milk with different starter cultures**

| **TRIAL** | **FERMENTATION PARAMETERS** | | | **CONDITIONS AT START** | | **CONDITIONS AT END** | | | |
|---|---|---|---|---|---|---|---|---|---|
| **ALMOND MILK** | STARTER CULTURE | Temp | Time | COUNTS | pH | COUNTS | pH | viscosity mPas/sec | remarks |
| **1** | *S. thermophilus ES5* | 42 °C | 5 h | 3.8 x 10⁷ | 6.63 | 3.29 x 10⁶ | 4.67 | 96 - 100 | Good flavour, creamy |
| **2** | *S. thermophilus BS5* | 37 °C | 5 h | 3.25 x 10' | 6.60 | 7.9 x 10⁷ | 4-52 | 195 - 205 | Good flavour, |
| | + B. *lactis BL230* | | | 1.1 x 10⁷ | | 9.2 x 10⁷ | | | creamy |
| **3** | *S. thermophilus BS5* | 37 °C | 4 h 15 m | 5.9 x 10⁷ | 6.53 | 6.43 x 10⁸ | 4.55 | 41.00 | Curdled appearance |
| | + *L. casei BL227* | | | 1.4 x 10⁸ | | 8.3 x 10⁸ | | | |
| **4** | *S. thermophilus ES5* | 37 °C | 4 h 15 m | 8-9 x 10⁶ | 6.52 | 9.3 x 10⁷ | 4.50 | 173 - 200 | Excellent flavour. |
| | + *L*. *acidophilus EL228* | | | 1.5 x 10⁷ | | 6.6 x 10⁷ | | | smooth and creamy |

### Conservation of the viability and post-acidification of the different probiotics in fermented almond milk.

With the aim of studying the viability of the probiotic bacteria introduced in these products over the course of storage time in refrigeration and display on cold shelves, the difference was determined between the number of viables at the start (day 1) and at 23-30 days of conservation in refrigeration (4°C) in three fermentations containing *St. salivarius* subsp. *thermophilus* BS5, *St. salivarius* subsp. *thermophilus* BS5 and *Lactobacillus acidophilus* BL228 and *St. salivarius* subsp *thermophilus* BS5 and *Bifidobacterium lactis* BL230 (Table 6). As a conclusion, we can affirm that, although the *St*. *thermophilus* counts fell in all cases by around one order of magnitude, for *Lactobacillus acidophilus* and especially *Bifidobacterium lactis* they remained at virtually the same level of viability.

**TABLE 6. Effect of incubation at 4°C on viable counts of St. salivarius subsp. thermophilus (BS5), Lactobacillus acidophilus (BL228) and Bifidobacterium lactis (BL230), and also on the pH, in each of the three fermentations of almond milk made for studying its acidification when cold.**

| **Fermentation** | **t (days) storage** | **BS5 (cfu/ml)** | **LB228 (cfu/ml)** | **LB230 (cfu/ml)** | **pH** |
|---|---|---|---|---|---|
| 1 | 1 | 1.2 · 10⁸ | | | 4.50 |
| | 23 | 1.73 · 10⁶ | | | 4.41 |
| 2 | 1 | 9.3 · 10⁷ | 6.6 · 10⁷ | | 4.50 |
| | 31 | 1.2 · 10⁷ | 1.9 · 10⁶ | | 4.38 |
| 3 | 1 | 1.05 · 10⁸ | | 7.3 · 10⁷ | 4.58 |
| | 30 | 5.3 · 10⁶ | | 7.3 · 10⁷ | 4.48 |

In relation to the negative phenomenon of continued acidification of the fermented products during storage (post-acidification), we have been able to confirm that the change is very small: of 0.10 - 0.13 pH units (Table 6) .

### EXAMPLE 3

### OBTAINING FERMENTED PRODUCTS STARTING FROM OTHER TREE NUTS: FERMENTATION OF A HAZELNUT SHAKE.

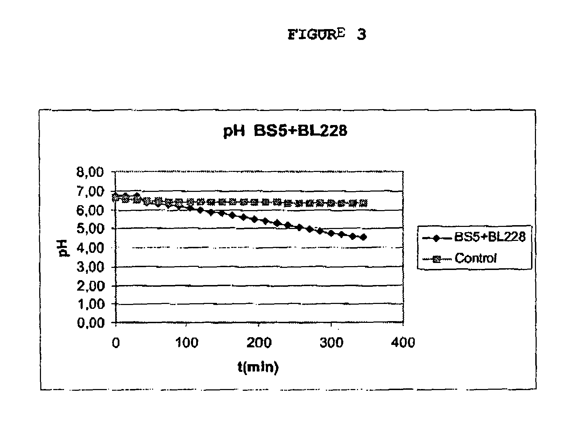

Hazelnuts and other tree nuts also possess small quantities of simple fermentable sugars, nevertheless, we wish to test the addition of saccharose in abundant quantities as fermentation substrate and sweetener. For the test that is described, we start from a hazelnut shake (Diemilk, Nutriops), sterilised at high temperature (UHT) with 7% of hazelnuts, maltodexrines and saccharose, giving the following composition per 100 g: carbohydrates, 6.3g; sugars, 3.6g; fats, 2.2g (saturated, 0.6g; monounsaturated, 1.2g; polyunsaturated, 0.4g); food fibre, 0.4g; Na, 0.05g. Inoculi of species *St*. *salivarius* subsp. *thermophilus* BS5 and *L. acidophilus* BL228 were added to this product and it was incubated at 37°C (Figure 3). An appropriate drop in pH (4.53) could be observed along with a good proliferation of the two inoculated bacteria, giving as a result excellent physico-chemical and sensorial characteristics (Table 4). So, the viscosity was estimated at 110 mPas (Table 7).

**Table 7. Result of Different fermentation trials on hazelnut shake (or milk) with S. thermophilus BS5 and L. acidophilus BL228.**

| **TRIAL** | **FERMENTATION PARAMETERS** | | | **CONDITIONS AT START** | | **CONDITIONS AT END** | | | |
|---|---|---|---|---|---|---|---|---|---|
| **HAZELNUT SHAKE (MILK)** | STARTER CULTURE | Temp | Time | COUNTS | pH | COUNTS | pH | viscosity mPas/sec | remarks |
| | *S*. *thermophilus* BS5 *L. acidophilus BL228* | 37 °C | 5 h 45 m | 4 x 10⁶ 2.9 x 10⁷ | 6.7 1 | 3 x 10⁸ 1.16 x 10⁸ | 4.5 3 | 110 | Good flavour, intense syneresis |

### EXAMPLE 4

### OBTAINING FERMENTED PRODUCTS STARTING FROM ORGEAT OF CHUFA

The high concentration of sugars present in chufa orgeat constitutes an excellent fermentable substrate for lactic bacteria and bifidobacteria. Due to possessing a low concentration of proteins (Table 3), the viscosity will have to be achieved by production of bacterial exopolysaccharides and/or by addition of stabilisers and gelling agents. The high concentration of starches in orgeat prevents the use of heat treatments beyond 72°C without causing gelling. This requires additional treatments such as settling or the use of amylolytic enzymes prior to the heat treatment.

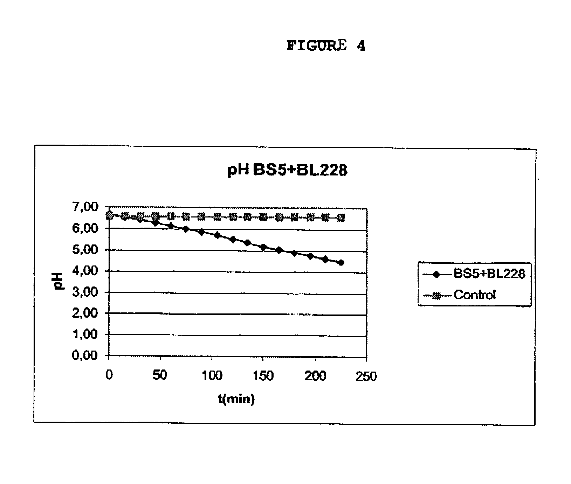

For the fermentation trial, we take a commercial UHT chufa orgeat (Frixia, Industrias Lácteas Morais, S.A.) with the following ingredients: water, chufa, sugar, emulsifier (E472, E471), natural flavourings, cinnamon and lemon. To this product inoculi of *St. salivarius* subsp *thermophilus* BS5 and *L. acidophilus* BL228 were added and it was incubated at 37°C (Figure 4). After incubating for 3 h and 45 minutes, a suitable drop in pH (pH = 4.47) was achieved, with a product being obtained that had a creamy appearance (viscosity 60mPas) and excellent flavour (Table 6).
Although the inoculated bacteria did not manage to proliferate in the orgeat as in other substrates, it was indeed shown to be metabolically very active, as deduced from the drop in pH.

**Table 8. Result of different fermentation trials on orgeat with S. thermophilus BS5 and L. acidaphilus BL228.**

| **TRIAL** | **FERMENTATION PARAMETERS** | | | **CONDITIONS AT START** | | **CONDITIONS AT END** | | | |
|---|---|---|---|---|---|---|---|---|---|
| **ORGEAT** | STARTER CULTURE | Temp | Time | COUNTS | pH | COUNTS | pH | viscosity mPas/sec | remarks |
| | *S*. *thermophilus BS5* *L*. *acidophilus BL228* | 37°C | 3 h 45 m | 3.7 x 10⁶ 3.2 x 10⁷ | 6.66 | 6.6 x 10⁶ 4.75 x 10⁷ | 4.47 | 60 | Excellent flavour, creamy |

### Example 5

### FERMENTED PRODUCTS PASTEURISED WITH "BIFIDUS EFFECT".

This application would have a fair degree of importance and would give rise to FERMENTED PASTEURISED PRODUCTS WHICH WILL NOT REQUIRE COLD CHAIN by starting from any of the above examples and adding a pasteurisation stage following fermentation... This particular embodiment is carried out starting from the above examples to which are added, among other additives, oligofructosaccharides or different starches of slow use (in order to achieve the "BIFID EFFECT") to the almond milk mother liquor, adjusting its concentration, and also that of other gelling agents (the oligofructosaccharides have thickening properties on their own) in order to obtain the desired viscosity. In this case, the initial fermentation will be carried out at least with one strain of *S. salivarius* subsp. *thermophilus* and afterwards the product is pasteurised, being left ready for marketing. Although this product will lack lactic ferments and live probiotics, it will contribute major logistic and marketing advantages.

## Claims

1. Product fermented without lactose **characterised in that** it does not contain either lactose or soy or any of their components, the product being obtained starting from a milky solution of tree nuts and/or chufa orgeat, blended and homogenised in water, as substrate for the fermentation, using as ferment lactic bacteria, bifidobacteria or other microorganisms alone or in combination and the finished fermented product presents a texture and viscosity equivalent to that of traditional yoghurt or of drinkable yoghurts or fermented drinks.

2. Product fermented without lactose according to claim 1, **characterised in that** it does not contain milk or any of its components.

3. Product fermented without lactose according to claims 1 and 2, **characterised in that** added to the fermentation substrate as adjuvant substrates are various kinds of sugars or carbohydrates, for example, mono- and disaccharides.

4. Product fermented without lactose according to claims 1 to 3, **characterised in that** the fermentation substrate is almond milk.

5. Product fermented without lactose according to claims 1 to 3, **characterised in that** the fermentation substrate is hazelnut milk.

6. Product fermented without lactose according to claims 1 to 3, **characterised in that** the fermentation substrate is chufa orgeat which is a drink of *Cyperus sculentus*.

7. Product fermented without lactose according to claims 4 to 6, **characterised in that** the fermentation substrate is a mixture of substrates.

8. Product fermented without lactose according to claims 1 to 7, **characterised in that** the ferment comprises the species of lactic bacterium *Streptococcus salivarius* subsp *thermophilus*.

9. Product fermented without lactose according to claims 1 to 8, **characterised in that** the ferment comprises the species of lactic bacterium *Lactobacillus delbruekii* subsp. *bulgaricus*."

10. Product fermented without lactose according to claims 1 to 9, **characterised in that** the ferment comprises any of the species of bifidobacteria as probiotics *Bifidobacterium lactis, Lactobacillis casei* and *Lactobacillus acidophilus.*

11. Product fermented without lactose according to claims 1 to 10, **characterised in that** the ferment comprises any of the species of bifidobacteria as probiotics *Lactobacillus rhamnosus*, *Lactobacillus johnsonii, Lactobacillus fermentum* or *Lactobacillus reuteri.*

12. Product fermented without lactose according to claims 1 to 11, **characterised in that** the ferment comprises the inoculum kefir or any of its components.

13. Product fermented without lactose according to claims 1 to 12, **characterised in that** carbohydrates and proteins and additives can be added or fats and oils can be eliminated in order to obtain products possessing very diverse physico-chemical, nutritional and sensorial products or products with improved conservation.

14. Product fermented without lactose according to claim 13, **characterised in that** different types of sugars or carbohydrates are added on account of their sweetening, dietetic or functional properties.

15. Product fermented without lactose according to claim 14, **characterised in that** the sugars or carbohydrates are dietetic fibre or oligosaccharides with bifidogenic effect.

16. Product fermented without lactose according to claim 13, **characterised in that** artificial sweeteners or non-metabolisable sugars such as fructose or sorbitol are added.

17. Product fermented without lactose according to claim 13, **characterised in that** carob gum, xanthane gum, acacia gum, maize starch, carragenate and/or pectin are added as gelling agents, thickeners or stabilisers.

18. Product fermented without lactose according to claim 13, **characterised in that** amylolytic enzymes are added in order to prevent the occurrence of gelling during the heat treatment.

19. Product fermented without lactose according to claim 13, **characterised in that** supplements are added in order to enrich these products with certain minerals (Fe, Ca) and vitamins.

20. Product fermented without lactose according to claims 1 to 19, **characterised in that** the final fermented product possesses live bacteria which, after 28 days of storage at refrigeration temperature, contain at least 10⁶ cfu/ml, it has acidity, pH < 4.6, with viscosity values between approximately 60 and 250mPas/sec, and the coliform counts are zero.

21. Product fermented without lactose according to claim 20, **characterised in that** the final fermented product possesses low post-acidification, in other words, the pH drops by less than 0.2 pH units in 28 days.

22. Product fermented without lactose according to claims 1 to 19, **characterised in that** the final fermented product is pasteurised following fermentation, maintaining its inherent characteristics of acidity, pH < 4.6, with viscosity values between approximately 60 and 250mPas/sec, and the coliform counts are zero.

23. Method for obtaining a product fermented without lactose according to claims 1 to 22, **characterised in that** it comprises the following stages:
optionally Coarse crushing of the substrate
Addition of water
Addition of sugars
Addition of additives, optionally at a later stage
Fine grinding, with a stone or colloidal mill until a suspension is obtained with a texture that is from smooth to lumpy.
Adjustment of the concentration of dry matter Removal of fats
Homogenisation until a uniform size of fat particles in suspension is achieved.
Heat treatment of pasteurisation or sterilisation, the conditions of temperature, time and pressure depending on the nature of the substrate, on the size of particles in the suspension, its concentration of solids, viscosity, microbiological load prior to treatment and stability of components to the heat treatment,
Addition of ferments.
Fermentation at between 37 and 42°C until a pH < 4.6 is achieved.
Refrigeration in order to halt the fermentation.

24. Method for obtaining a product fermented without lactose according to claim 23, **characterised in that** after the fermentation a subsequent pasteurisation is carried out in order to obtain pasteurised products after the fermentation which do not require refrigeration and have a useful life of more than 28 days.

## Patentansprüche

1. Ohne Laktose fermentiertes Produkt, **dadurch gekennzeichnet, dass** es weder Laktose noch Soja oder jedwede ihrer Komponenten enthält, wobei das Produkt ausgehend von einer milchigen Lösung aus Baumnüssen und/oder Erdmandel-Orgeat, gemischt und in Wasser homogenisiert erhalten wird, als Substrat zur Fermentation unter Verwendung von Milchsäurebakterien, Bifidobakterien oder anderen Mikroorganismen allein oder in Kombination als Fermentationsmittel, und wobei das fermentierte Endprodukt eine Textur und Viskosität aufweist, die jener von traditionellem Joghurt oder Trinkjoghurts oder fermentierten Getränken gleich ist.

2. Ohne Laktose fermentiertes Produkt nach Anspruch 1, **dadurch gekennzeichnet, dass** es keine Milch oder jedwede ihrer Komponenten enthält.

3. Ohne Laktose fermentiertes Produkt nach Anspruch 1 und 2,
**dadurch gekennzeichnet, dass** dem Fermentationssubstrat verschiedene Arten von Zuckern oder Kohlehydraten, beispielsweise Mono- und Disaccharide, als Adjuvanssubstrate zugegeben werden.

4. Ohne Laktose fermentiertes Produkt nach den Ansprüchen 1 bis 3, **dadurch gekennzeichnet, dass** das Fermentationssubstrat Mandelmilch ist.

5. Ohne Laktose fermentiertes Produkt nach den Ansprüchen 1 bis 3, **dadurch gekennzeichnet, dass** das Fermentationssubstrat Haselnussmilch ist.

6. Ohne Laktose fermentiertes Produkt nach den Ansprüchen 1 bis 3, **dadurch gekennzeichnet, dass** das Fermentationssubstrat Erdmandel-Orgeat ist, bei dem es sich um ein Getränk aus *Cyperus sculentus* handelt.

7. Ohne Laktose fermentiertes Produkt nach den Ansprüchen 4 bis 6, **dadurch gekennzeichnet, dass** das Fermentationssubstrat eine Substratmischung ist.

8. Ohne Laktose fermentiertes Produkt nach den Ansprüchen 1 bis 7, **dadurch gekennzeichnet, dass** das Fermentationsmittel die Milchsäurebakterien-Spezies *Streptococcus salivarius subsp. thermophilus* umfasst.

9. Ohne Laktose fermentiertes Produkt nach den Ansprüchen 1 bis 8, **dadurch gekennzeichnet, dass** das Fermentationsmittel die Milchsäurebakterien-Spezies *Lactobacillus delbruekii subsp. bulgaricus* umfasst.

10. Ohne Laktose fermentiertes Produkt nach den Ansprüchen 1 bis 9, **dadurch gekennzeichnet, dass** das Fermentationsmittel eine der Bifidobakterien-Spezies *Bifidobacterium lactis, Lactobacillus casei* und *Lactobacillis acidophilus* als Probiotikum umfasst.

11. Ohne Laktose fermentiertes Produkt nach den Ansprüchen 1 bis 10, **dadurch gekennzeichnet, dass** das Fermentationsmittel eine der Bifidobakterien-Spezies *Lactobacillus rhamnosus, Lactobacillus johnsonii, Lactobacillus fermentum* oder *Lactobacillus reuteri* als Probiotikum umfasst.

12. Ohne Laktose fermentiertes Produkt nach den Ansprüchen 1 bis 11, **dadurch gekennzeichnet, dass** das Fermentationsmittel das Inokulum Kefir oder jedwede seiner Komponenten umfasst.

13. Ohne Laktose fermentiertes Produkt nach den Ansprüchen 1 bis 12, **dadurch gekennzeichnet, dass** Kohlehydrate und Proteine und Zusatzstoffe hinzugefügt oder Fette und Öle eliminiert werden können, um Produkte zu erhalten, die sehr vielfältige physicochemische, Nährstoff- und sensorische Produkte oder Produkte mit verbesserter Konservierung besitzen.

14. Ohne Laktose fermentiertes Produkt nach Anspruch 13, **dadurch gekennzeichnet, dass** verschiedene Arten von Zuckern oder Kohlehydraten aufgrund ihrer süßenden, diätetischen oder funktionellen Eigenschaften hinzugefügt sind.

15. Ohne Laktose fermentiertes Produkt nach Anspruch 14, **dadurch gekennzeichnet, dass** die Zucker oder Kohlehydrate dietätischer Ballaststoff oder Oligosaccharide mit bifidogener Wirkung sind.

16. Ohne Laktose fermentiertes Produkt nach Anspruch 13, **dadurch gekennzeichnet, dass** künstliche Süßungsmittel oder nicht metabolisierbare Zucker, beispielsweise Fruktose oder Sorbitol, zugegeben sind.

17. Ohne Laktose fermentiertes Produkt nach Anspruch 13, **dadurch gekennzeichnet, dass** Johannisbrotkernmehl, Xanthan, Gummi arabicum, Maisstärke, Carragenat und/oder Pektin als Geliermittel, Verdickungsmittel oder Stabilisatoren hinzugefügt ist bzw. sind.

18. Ohne Laktose fermentiertes Produkt nach Anspruch 13, **dadurch gekennzeichnet, dass** amylolytische Enzyme hinzugefügt sind, um eine Gelierung während der Hitzebehandlung zu verhindern.

19. Ohne Laktose fermentiertes Produkt nach Anspruch 13, **dadurch gekennzeichnet, dass** Hilfsstoffe hinzugefügt sind, um diese Produkte mit gewissen Mineralien (Fe, Ca) und Vitaminen anzureichern.

20. Ohne Laktose fermentiertes Produkt nach den Ansprüchen 1 bis 19, **dadurch gekennzeichnet, dass** das fermentierte Endprodukt lebendige Bakterien besitzt, die nach 28 Tagen Lagerung bei Kühltemperatur zumindest 10⁶ KbE/ml enthalten, dass es einen Säuregrad aufweist und einen pH-Wert von < 4,6 hat, wobei Viskositätswerte zwischen ungefähr 60 und 250 mPas/s vorliegen und die Coliformzählungen Null ergeben.

21. Ohne Laktose fermentiertes Produkt nach Anspruch 20, **dadurch gekennzeichnet, dass** das fermentierte Endprodukt eine niedrige Nachsäuerung besitzt, anders ausgedrückt, der pH-Wert fällt in 28 Tagen um weniger als 0,2 pH-Einheiten.

22. Ohne Laktose fermentiertes Produkt nach den Ansprüchen 1 bis 19, **dadurch gekennzeichnet, dass** das fermentierte Endprodukt nach der Fermentation pasteurisiert wird, wobei seine inhärenten Säureeigenschaften erhalten bleiben und sein pH-Wert < 4,6 ist,
wobei Viskositätswerte zwischen ungefähr 60 und 250 mPas/s vorliegen und die Coliformzählungen Null ergeben.

23. Verfahren zum Erhalten eines ohne Laktose fermentierten Produkts nach den Ansprüchen 1 bis 22, **dadurch gekennzeichnet, dass** das Verfahren die folgenden Schritte umfasst:
gegebenenfalls Grobzerkleinern des Substrates;
Zugeben von Wasser;
Zugeben von Zuckern;
Zugeben von Zusatzstoffen, gegebenenfalls während eines späteren Schritts;
Feinmahlen mit einer Stein- oder Kolloidmühle, bis eine Suspension mit einer glatten bis klumpigen Textur erhalten wird;
Einstellen der Konzentration von Trockenmaterie;
Entfernen von Fetten;
Homogenisieren, bis eine einheitliche Größe von Fettpartikeln in Suspension erzielt wird;
Hitzebehandeln durch Pasteurisation oder Sterilisation, wobei die Temperatur-, Zeit- und Druckbedingungen von der Beschaffenheit des Substrates, der Größe von Partikeln in der Suspension, dessen Feststoffkonzentration, Viskosität, mikrobiologischer Belastung vor der Behandlung und Stabilität der Komponenten gegenüber der Hitzebehandlung abhängen;
Zugeben von Fermentationsmitteln;
Fermentieren bei zwischen 37 und 42°C, bis ein pH-Wert von < 4,6 erzielt wird;
Kühlen zum Stoppen der Fermentation.

24. Verfahren zum Erhalten eines ohne Laktose fermentierten Produkts nach Anspruch 23, **dadurch gekennzeichnet, dass** auf die Fermentation eine Pasteurisation folgt, um nach der Fermentation pasteurisierte Produkte zu erhalten, die keiner Kühlung bedürfen und eine Nutzungsdauer von länger als 28 Tagen aufweisen.

## Revendications

1. Produit fermenté sans lactose **caractérisé en ce qu'**il ne contient ni lactose ni soja ni aucun de leurs composants, le produit étant obtenu en partant d'une solution laiteuse de noix et/ou d'orgeat de souchet, mélangée et homogénéisée dans de l'eau, comme substrat pour la fermentation, en utilisant comme ferments lactiques des bactéries, des bifidobactéries ou d'autres micro-organismes seuls ou en combinaison et le produit fini fermenté présente une texture et une viscosité équivalentes à celles des yoghourts classiques ou des yoghourts buvables ou des boissons fermentées.

2. Produit fermenté sans lactose selon la revendication 1, **caractérisé en ce qu'**il ne contient pas de lait ni un quelconque de ses composants.

3. Produit fermenté sans lactose selon les revendications 1 et 2, **caractérisé en ce qu'**on ajoute au substrat de fermentation, comme substrats adjuvants, diverses sortes de sucres ou glucides, par exemple, des mono- et disaccharides.

4. Produit fermenté sans lactose selon les revendications 1 à 3, **caractérisé en ce que** le substrat de fermentation est du lait d'amande.

5. Produit fermenté sans lactose selon les revendications 1 à 3, **caractérisé en ce que** le substrat de fermentation est du lait de noix.

6. Produit fermenté sans lactose selon les revendications 1 à 3, **caractérisé en ce que** le substrat de fermentation est de l'orgeat de souchet qui est une boisson de *Cyperus sculentus.*

7. Produit fermenté sans lactose selon les de fermentation est un mélange de substrats.

8. Produit fermenté sans lactose selon les revendications 1 à 7, **caractérisé en ce que** le ferment comprend l'espèce de bactérie lactique *Streptococcus salivarius* sous-espèce *thermophilus.*

9. Produit fermenté sans lactose selon les revendications 1 à 8, **caractérisé en ce que** le ferment comprend l'espèce de bactérie lactique *Lactobacillus delbruekii* sous-espèce *bulgaricus.*

10. Produit fermenté sans lactose selon les revendications 1 à 9, **caractérisé en ce que** le ferment comprend l'une quelconque des espèces de bifidobactéries comme les probiotiques *Bifidobacterium lactis, Lactobacillus casei* et *Lactobacillus acidophilus.*

11. Produit fermenté sans lactose selon les revendications 1 à 10, **caractérisé en ce que** le ferment comprend l'une quelconque des espèces de bifidobactéries comme les probiotiques *Lactobacillus rhammosus, Lactobacillus johnsonii, Lactobacillus fermentum* ou *Lactobacillus reuteri.*

12. Produit fermenté sans lactose selon les revendications 1 à 11, **caractérisé en ce que** le ferment comprend le kéfir d'inoculum ou un quelconque de ses composants.

13. Produit fermenté sans lactose selon les revendications 1 à 12, **caractérisé en ce que** des glucides et des protéines et des additifs peuvent être ajoutés, ou que des graisses et des huiles peuvent être éliminées pour obtenir des produits possédant des propriétés physico-chimiques, nutritionnelles et sensorielles très diverses ou des produits avec une conservation améliorée.

14. Produit fermenté sans lactose selon la revendication 13, **caractérisé en ce que** différents types de sucres ou de glucides sont ajoutés à cause de leurs propriétés édulcorantes, diététiques ou fonctionnelles.

15. Produit fermenté sans lactose selon la revendication 14, **caractérisé en ce que** les sucres ou les glucides sont des fibres diététiques ou des oligosaccharides avec un effet bifidogène.

16. Produit fermenté sans lactose selon la revendication 13, **caractérisé en ce que** des édulcorants artificiels ou des sucres non métabolisables comme le fructose ou le sorbitol sont ajoutés.

17. Produit fermenté sans lactose selon la revendication 13, **caractérisé en ce que** de la gomme de caroube, de la gomme de xanthane, de la gomme d'acacia, de l'amidon de maïs, du carragénate et/ou de la pectine sont ajoutés comme agents gélifiants, épaississants ou stabilisants.

18. Produit fermenté sans lactose selon la revendication 13, **caractérisé en ce que** des enzymes amylolytiques sont ajoutés pour prévenir l'apparition de la gélification durant le traitement thermique.

19. Produit fermenté sans lactose selon la revendication 13, **caractérisé en ce que** les suppléments sont ajoutés pour enrichir ces produits avec certains minéraux (Fe, Ca) et vitamines.

20. Produit fermenté sans lactose selon les revendications 1 à 19, **caractérisé en ce que** le produit final fermenté possède des bactéries vivantes qui, après 28 jours de stockage à la température de réfrigération, contiennent au moins 10⁶ cfu/ml, qu'il a une acidité, pH < 4,6, avec des valeurs de viscosité approximativement entre 60 et 250 mPas/s et les comptages des coliformes sont nuls.

21. Produit fermenté sans lactose selon la revendication 20, **caractérisé en ce que** le produit final fermenté possède une faible post-acidification, en d'autres termes, le pH chute de moins 0,2 unité de pH en 28 jours.

22. Produit fermenté sans lactose selon les revendications 1 à 19, **caractérisé en ce que** le produit final fermenté est pasteurisé après fermentation, en conservant ses caractéristiques naturelles d'acidité, pH < 4,6, avec des valeurs de viscosité approximativement entre 60 et 250 mPas/s et les comptages des coliformes sont nuls.

23. Procédé d'obtention d'un produit fermenté sans lactose selon les revendications 1 à 22,
**caractérisé en ce qu'**il comprend les étapes suivantes :
éventuellement le broyage grossier du substrat l'addition d'eau
l'addition de sucres
l'addition d'additifs, éventuellement à une étape ultérieure
le broyage fin, avec une pierre ou un moulin colloïdal jusqu'à ce qu'on obtienne une suspension avec une texture qui est lisse à grumeleuse
l'ajustement de la concentration de matière sèche
l'élimination des matières grasses
l'homogénéisation jusqu'à ce qu'une taille uniforme des particules grasses en suspension soit obtenue
le traitement thermique de pasteurisation ou de stérilisation, les conditions de température, de temps et de pression dépendant de la nature du substrat, de la taille des particules en suspension, de la de la taille des particules en suspension, de la concentration en solides, de la viscosité, de la charge microbiologique avant traitement et de la stabilité des composants au traitement thermique
l'addition des ferments
la fermentation entre 37 et 42°C jusqu'à ce qu'un pH de < 4,6 soit atteint
la réfrigération pour arrêter la fermentation.

24. Procédé d'obtention d'un produit final fermenté sans lactose selon la revendication 23,
**caractérisé en ce qu'**après la fermentation, une pasteurisation ultérieure est effectuée pour obtenir des produits pasteurisés après la fermentation qui ne nécessitent pas de réfrigération et ont une durée de conservation de plus de 28 jours.
